# EUROPEAN PATENT SPECIFICATION

(11) **EP 4 557 786 B1**
(45) Date of publication and mention of the grant of the patent: **09.09.2026**
(21) Application number: 23851586.0
(22) Date of filing: 24.07.2023
(51) Int. Cl.: H04L 67/51, H04L 61/4511

(54) **EAS SEARCH METHOD, APPARATUS AND STORAGE MEDIUM**
EAS-SUCHVERFAHREN, VORRICHTUNG UND SPEICHERMEDIUM
PROCÉDÉ, DISPOSITIF ET SUPPORT DE STOCKAGE DE RECHERCHE EAS

(30) Priority: 10.08.2022 CN 202210957828; 30.09.2022 CN 202211216235
(43) Date of publication of application: 21.05.2025
(73) Proprietor: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LIU, Tangqing, Beijing 100053 (CN); WANG, Dan, Beijing 100053 (CN); SUN, Tao, Beijing 100053 (CN); LU, Lu, Beijing 100053 (CN)
(74) Representative: Novagraaf Technologies
(86) International application number: PCT/CN2023/108979
(87) International publication number: WO 2024/032364

(56) References cited:
- WO-A1-2022/033832
- CN-A- 113 573 303
- CN-A- 113 794 784
- CN-A- 114 338 603
- "3rd Generation Partnership Project; Technical Specification Group Services and System Aspects; 5G System Enhancements for Edge Computing; Phase 2 (Release 18)", 14 June 2022 (2022-06-14), XP052194575, Retrieved from the Internet <URL:https://ftp.3gpp.org/tsg_sa/WG2_Arch/Latest_SA2_Specs/Latest_draft_S2_Specs/23700-48-030.zip 23700-48-030-draft rm.docx> [retrieved on 20220614]
- "3rd Generation Partnership Project; Technical Specification Group Services and System Aspects; 5G System Enhancements for Edge Computing; Stage 2 (Release 17)", no. V17.3.0, 15 June 2022 (2022-06-15), pages 1 - 55, XP052182886, Retrieved from the Internet <URL:https://ftp.3gpp.org/Specs/archive/23_series/23.548/23548-h30.zip 23548-h30.docx> [retrieved on 20220615]

## Description

### CROSS-REFERENCE TO RELATED APPLICATION

The present application is based on and claims priority to Chinese patent application No. 202210957828.0 filed on August 10, 2022, and Chinese patent application No. 202211216235.5 filed on September 30, 2022.

### TECHNICAL FIELD

The present disclosure relates to the field of core network, and in particular to an Edge Application Server (EAS) search method, a first function, and a storage medium.

### BACKGROUND

The related art proposes an Operator Platform (OP), which is a third-party application platform uniformly controlled by the operator. Users may directly interact with the OP to implement a simple search process of an EAS.

However, there is no effective solution in the related art for how to discover the EAS across operators.

Document XP052194575 entitled "3rd Generation Partnership Project; Technical Specification Group Services and System Aspects; 5G System Enhancements for Edge Computing; Phase 2 (Release 18)" is a technical report and describes key issues and solutions for the phase 2 of the system enhancements for Edge Computing in 5GS.

Document XP052182886 entitled "3rd Generation Partnership Project; Technical Specification Group Services and System Aspects; 5G System Enhancements for Edge Computing; Stage 2 (Release 17)" is a technical specification and defines the stage 2 specifications for enhancements of 5G system to support Edge Computing.

### SUMMARY

In order to solve the related technical problem, embodiments of the disclosure provide an EAS search method and an apparatus, related functions, and a storage medium.

The invention is set out in the appended set of claims.

With the EAS search method and the apparatus, , and the storage medium provided by the embodiments of the disclosure, the first function sends at least one of the first information or the second information to the second function to perform the EAS search. The second function receives at least one of the first information or the second information from the first function to perform the EAS search. With the solution provided by the embodiments of the disclosure, based on the information transmission mechanism between the first function and the second function, by deploying the first function on the first PLMN and deploying the second function on the second PLMN, the EAS may be discovered across operators (i.e., the EAS may be discovered across networks), thus enabling the cross-operator global QoS guarantee.

### BRIEF DESCRIPTION OF THE DRAWINGS

FIG. 1 is a schematic flowchart of an EAS search method of an embodiment of the disclosure.
FIG. 2 is a schematic diagram of a cross-operator EAS search process of an example of an application of the disclosure.
FIG. 3 is a schematic diagram of another cross-operator EAS search process of an example of an application of the disclosure.
FIG. 4 is a schematic diagram of a user plane data processing process of an example of an application of the disclosure.
FIG. 5 is a schematic diagram of tagging in a Layer 3 header of a data packet of an example of an application of the disclosure.
FIG. 6 is a schematic diagram of tagging in a Layer 2 header of a data packet of an example of an application of the disclosure.
FIG. 7 is a schematic diagram of a structure of an EAS search apparatus of an embodiment of the disclosure.
FIG. 8 is a schematic diagram of a structure of another EAS search apparatus of an embodiment of the disclosure.
FIG. 9 is a schematic diagram of a structure of a third EAS search apparatus of an embodiment of the disclosure.
FIG. 10 is a schematic diagram of a structure of a fourth EAS search apparatus of an embodiment of the disclosure.
FIG. 11 is a schematic diagram of a structure of a first function of an embodiment of the disclosure.
FIG. 12 is a schematic diagram of a structure of a third function of an embodiment of the disclosure.
FIG. 13 is a schematic diagram of a structure of a seventh function of an embodiment of the disclosure.
FIG. 14 is a schematic diagram of a structure of a second function of an embodiment of the disclosure.
FIG. 15 is a schematic diagram of a structure of an eleventh function of an embodiment of the disclosure.
FIG. 16 is a schematic diagram of a structure of an EAS search system of an embodiment of the disclosure.

### DETAILED DESCRIPTION

The disclosure is described in further detail below in combination with the drawings and embodiments.

In the related art, when the user is in an Edge Hosting Environment (EHE), it is assumed that the network of an operator 1 exists in the environment, but an EAS 1 belonging to the operator 1 does not exist, and there is only coverage of a 5th Generation mobile communication technology core network (5GC) 2 and an EAS 2 belonging to an operator 2. If the User Equipment (UE) needs to access an edge application, how to discover the EAS 2 cross operators and guarantee an end-to-end QoS (i.e., a cross-operator QoS) of UE services becomes an urgent problem to be solved. In other words, there is no effective solution in the related art for how to discover the EAS across operators.

Based on this, in the various embodiments of the disclosure, the first function sends at least one of the first information or the second information to the second function to perform the EAS search. The second function receives at least one of the first information or the second information from the first function to perform the EAS search. Based on the information transmission mechanism between the first function and the second function, by deploying the first function on the first PLMN and deploying the second function on the second PLMN, the EAS may be discovered across operators (i.e., the EAS may be discovered across networks), thus enabling cross-operator global QoS guarantee.

An embodiment of the disclosure provides an EAS search method applied to a first function. The method includes the following operation.

At least one of first information or second information is sent to a second function to perform an EAS search.

Here, it is to be understood that at least one of the first information or the second information is used for the EAS search.

Here, the first function and the second function belong to different networks, such as belonging to different PLMNs, Non-Public Networks (NPN), or the like. Exemplarily, the first function may be deployed on a first PLMN, that is, the first function belongs to the first PLMN. The second function may be deployed on a second PLMN, that is, the second function belongs to the second PLMN. The first PLMN and the second PLMN may belong to different operators. In this way, through the information transmission mechanism between the first function and the second function, the EAS may be discovered across operators, thus enabling the cross-operator global QoS guarantee.

In a practical application, the first function may include at least one of:
an EASDF;
an SMF;
SEPP; or
an NEF.

Correspondingly, the second function may include at least one of:
an EASDF;
an SMF;
SEPP; or
an NEF.

In a practical application, the first function and the second function may be the same type of network functions, such as EASDF 1 and EASDF 2. Alternatively, the first function and the second function may also be different types of network functions, such as EASDF 1 and SMF 2, SMF 1 and EASDF 2, or the like. Here, the terms "1" and "2" represent that the network functions belong to different networks.

In an embodiment, the first information may include at least one of:
a terminal IP address;
a terminal identifier (e.g., an ID);
an SUPI;
a GPSI;
a PLMN identifier (e.g., an ID);
a notification endpoint;
a terminal location (which may also be referred to as a UE location);
DNS message handling rules;
an application identifier (e.g., an ID); or
N6 transmission requirements.

In a practical application, the terminal may also be referred as UE or a user.

In a practical application, the terminal IP address refers to an IP address of a specific terminal that initiates a cross-operator discovery process of the EAS.

In a practical application, the first information may be understood as session-related information of the specific terminal.

In a practical application, a specific implementation of the terminal location may include a cell identifier (e.g., an ID). Alternatively, the terminal location may refer to the absolute position of the terminal (i.e., latitude and longitude information, or the like). The specific implementation of the terminal location may be set according to requirements, which is not limited by the embodiments of the disclosure. Compared with the related art, the solution provided by the embodiments of the disclosure helps the second function to select, for the terminal, an EAS closer to the terminal based on the terminal location information, so as to better provide edge computing application services for the terminal.

In a practical application, the N6 transmission requirements may represent the transmission requirements during data transmission between two PLMNs (i.e., the first PLMN and the second PLMN), which may be specifically implemented by a DSCP value, that is, the DSCP value is used to represent the N6 transmission requirements. The DSCP value may be added to the IP layer by the UPF during the data packet processing, or tagged in the VXLAN tunnel or the VLAN tunnel.

In a practical application, the terminal may initiate a DNS query (which may be understood as a DNS query request, a DNS query message, or the like) to the first function to discover the EAS. The first function may process the received DNS query by the DNS message handling rules, such as forwarding the DNS query or other processing. Here, the operation that the DNS query is forwarded may include an operation that the DNS query is sent to the original destination address, or an operation that the DNS query is sent, according to the DNS message handling rules, to another destination address such as an edge DNS resolver (L-DNS resolver), a core DNS resolver (C-DNS resolver), or the like. The operation that other processing is performed on the DNS query may include an operation that location information, such as the terminal location, the location of the PSA UPF, or the like, is added to the DNS query according to the DNS message handling rules.

In a practical application, after receiving the DNS query, the first function may perform DNS rule matching to determine the target EAS. The notification endpoint may be used to indicate the destination to which the first function sends a notification after the DNS rules are matched. Exemplarily, assuming that the first function includes an EASDF and the notification endpoint includes an SMF, the EASDF may send a notification to the SMF after the DNS rules are matched.

With the solution provided by the embodiments of the disclosure, the first information may enable the second function to find an EAS having the best location, for example, closest to the terminal location or the location of the PSA UPF, thereby shortening the path length for the terminal to access the edge application, reducing the delay difference, and providing the terminal with services which are better, faster, and have a higher quality, larger traffic and a larger bandwidth.

In an embodiment, the second information may include at least one of:
[a DNS query (which may be understood as a DNS query request, a DNS query message, or the like);
EDNS;
an FQDN of an EAS;
a terminal IP address;
a terminal identifier (e.g., an ID); or
a terminal location.

In a practical application, the enhanced part of the EDNS may be filled with the terminal location or the location information of the PSA UPF.

In a practical application, the first function may acquire the first information from a third function before sending at least one of the first information or the second information to the second function.

Based on this, in an embodiment, the method may further include the following operation.

The first information is acquired from the third function.

Here, the third function may include at least one of:
an SMF;
an EASDF;
a PCF; or
an RAN.

In a practical application, the third function may actively provide (i.e., send) the first information to the first function. The third function may be selected and/or reselected by an eleventh function. The eleventh function may include an Access and Mobility Management Function (AMF).

Here, the eleventh function may acquire a first indication from UDM during a terminal registration process, and select the third function according to the first indication during a session creation process. Then, the third function may provide (i.e., send) the first information for the first function. Alternatively, during the session creation process, the third function may acquire the first indication from the UDM and send the first indication to the eleventh function, and the eleventh function may perform at least one of selection or reselection of the third function according to the first indication.

Here, it is to be understood that the first indication is used to select and/or reselect the third function, and the first indication may indicate that at least one of a terminal or a session supports EAS access across operator networks. Correspondingly, when the eleventh function performs at least one of selection or reselection of the third function according to the first indication, the eleventh function needs to select and/or reselect a third function that supports an EAS access function across operator networks, i.e., a third function that supports cross-operator EAS access services. The local of the eleventh function may be pre-configured with information on whether each third function supports cross-operator EAS access services, or the eleventh function may search for the third function that supports cross-operator EAS access services through the NRF when performing at least one of selection or reselection of the third function according to the first indication.

In a practical application, the EAS access across operator networks may also be referred to as cross-PLMN EHE access, sharing EHE access, sharing node access, cross-operator edge service access, or the like. The embodiments of the disclosure do not limit the name of such access services, as long as the function is implemented.

In a practical application, the first function may acquire the second information from a fourth function before sending at least one of the first information or the second information to the second function.

Based on this, in an embodiment, the method may further include the following operation.

The second information is acquired from the fourth function.

Here, the fourth function may include at least one of:
a terminal;
a base station;
an RAN; or
a UPF.

In a practical application, the third function may further perform at least one of the following operations.

DNS message handling rules are configured for the first function based on the terminal subscription data.

The DNS message handling rules are configured for the first function based on an indication that a terminal supports the EAS services.

A UPF is reselected based on a terminal identifier.

A UPF supporting the EAS services is reselected.

An appropriate EASDF is selected based on location information.

EDI of the EAS services is configured for the EASDF.

EDI is configured for the first function based on the location information.

In a practical application, before the first function sends at least one of the first information or the second information to the second function, the third function may perform one or more of the above configurations, and configure third information for the first function in the configuration process, i.e., send the third information to the first function. Alternatively, an AF may configure the third information for the first function, i.e., send the third information to the first function.

Based on this, in an embodiment, the method may further include the following operation.

The third information is configured, i.e., the third information is received.

Here, the third information may include at least one of:
an application identifier;
a PLMN identifier;
an IP address of the first function;
an FQDN of the first function;
an IP address of an EASDF;
an FQDN of the EASDF;
a geographic location;
an external group identifier;
an internal group identifier;
N6 transmission requirements;
a DSCP;
a VXLAN;
a VLAN; or
a service scope.

In a practical application, the third information may be pre-configured on the first function to perform one or more operations, such as searching, discovering, filtering, or the like, of the second function. The third information may also be referred to as EASDF Deployment Information, EAS Deployment Information Extension, Extension EDI, Enhanced EDI, or the like. The embodiments of the disclosure do not limit the name of the third information, as long as the function is implemented.

Here, the geographic location in the third information refers to a geographic range in which the EASDF may provide the EAS for the terminal. The geographic location may be implemented by a geographic area or a cell identifier, or it may refer to an absolute location (i.e., longitude and latitude information, or the like).

The N6 transmission requirements may represent the transmission requirements during data transmission between two PLMNs (i.e., the first PLMN and the second PLMN), which may be specifically implemented by a DSCP value, that is, the DSCP value is configured to represent the N6 transmission requirements. The DSCP value may be added to the IP layer, the VXLAN tunnel or the VLAN tunnel by the UPF during the data packet processing.

The service scope refers to a service scope in which the EASDF may provide the DNS resolution, or a service scope provided by an EAS that may be queried by the EASDF, or a service scope provided by an application that may be provided by the EASDF.

At least one of the external group identifier or the internal group identifier may be used to identify group users. Specifically, the external group identifier may be provided by the AF, and the NEF may map the external group identifier to the internal group identifier according to information received from the UDM (such as user subscription information). The internal group identifier is used within the network to identify a user from another network. Exemplarily, the external group identifier may be used to identify, to the second PLMN, a user from the first PLMN, and the internal group identifier may be used within the second PLMN to identify a user from an external PLMN.

In a practical application, at least one of the external group identifier or the internal group identifier may also be used to identify a user (group) that may access the EHE/edge services/edge environment/edge network/EAS in the edge network of another network/operator/PLMN. Exemplarily, at least one of the internal group identifier or the external group identifier may be used to identify, in a PLMN, one or more users that may access the edge EAS of the second PLMN.

In a practical application, the first function needs to discover (i.e., determine) the second function before sending at least one of the first information or the second information to the second function. In other words, after receiving a DNS query initiated by the terminal for discovering the EAS, the first function needs to determine a network that may provide corresponding EAS services for the terminal (e.g., the second PLMN), and to determine a network function in the network for discovering the EAS (i.e. the second network function).

In a practical application, the first function may discover the second function based on locally pre-configured information (e.g., the third information). Alternatively, the first function may also discover the second function through another network function other than itself.

Based on this, in an embodiment, the method may further include the following operation.

The second function is discovered through at least one of an eighth function or a ninth function.

Here, the eighth function includes the NRF of the network to which the first function belongs, such as NRF 1 of the first PLMN. The ninth function may include the NRF of the network to which the second function belongs, such as NRF 2 of the second PLMN. Here, 1 and 2 represent that the network functions belong to different networks.

In an embodiment, the operation that the second function is discovered may include at least one of the following operations.

Address information of the second function is discovered, i.e., the address information of the second function is determined.

An IP address of the second function is discovered, i.e., the IP address of the second function is determined.

An FQDN of the second function is discovered, i.e., the FQDN of the second function is determined.

Here, the address information may include one or more of the following types of address information: an IP address, an FQDN, a Media Access Control (MAC) address, or the like, which is not limited by the embodiments of the disclosure, as long as the function (i.e., enabling the first function to communicate with the second function) is implemented.

In an embodiment, the operation that the second function is discovered through the eighth function may include the following operation.

The second function is discovered, i.e., determined, through fourth information of the eighth function.

Here, the first function may acquire the fourth information from the eighth function, and determine the second function based on the fourth information. Alternatively, the first function sends a request for determining the second function to the eighth function. The eighth function may determine the second function based on the fourth information after receiving the request, and return the response to the request to the first function. The response may carry one or more of the address information, the IP address, the FQDN, or the like, of the second function, so that the first function can determine the second function.

Here, the fourth information may include at least one of:
EDI;
edge environment deployment information of another PLMN;
application information;
EAS location information;
third-party edge environment deployment information;
a PLMN identifier (e.g., an ID);
a DNAI;
N6 routing information;
a DSCP; or
an SLA.

In a practical application, the EDI in the fourth information refers to deployment information of an EAS in another network other than the network to which the first function belongs, such as deployment information of an EAS in another PLMN other than the first PLMN.

In a practical application, the EDI that needs to be transmitted between two networks (such as two PLMNs) may be translated by the NEF in the corresponding network (for example, EDI related information format conversion, information forwarding, or the like, is performed through a specific process), or may be pre-configured on at least one of the SMF or NRF in the corresponding network. In addition, the EDI may be transmitted through one or more network functions such as the SEPP, the NEF, or the East/Westbound Interface (E/WBI) in the corresponding network.

In a practical application, the edge environment deployment information of another PLMN refers to the edge environment deployment information of another PLMN other than the network to which the first function belongs, such as information of deployment location of an EAS in another PLMN other than the first PLMN. The third-party edge environment deployment information may refer to edge environment deployment information of another network other than the networks to which the first function and the second function belong.

In a practical application, the application information in the fourth information may include an application category, an application identifier, or the like, which is not limited by the embodiments of the disclosure.

In a practical application, the SLA in the fourth information may be negotiated in advance by two operators (such as the operators to which the first PLMN and the second PLMN respectively belong), which may provide service quality guarantee priority, such as QoS priority, for cross-operator EAS access services.

In a practical application, the DSCP in the fourth information may be used to guarantee the transmission quality during data transmission between two networks (such as two PLMNs), that is, the DSCP may represent N6 transmission requirements. Both of the two networks may support DSCP marking, thereby guaranteeing end-to-end low delay transmission.

In an embodiment, the fourth information may be configured by at least one of:
being pre-configured on the eighth function; or
being configured on the eighth function by a tenth function.

Here, the tenth information may include at least one of:
SEPP;
an SMF;
an NEF; or
an NRF.

In an embodiment, the operation that at least one of the first information or the second information is sent to the second function may include the following operation.

At least one of the first information or the second information is sent to the second function by at least one of:
a user plane path;
a control plane path; or
invoking a service interface.

Here, the user plane path may be a conventional IP network which performs data transmission through at least one of a data network or the Internet. Alternatively, the user plane path may also be a dedicated traffic path, which is a dedicated IP tunnel created for transmission of one or more of the first information, the second information, or service traffic.

The user plane path may at least include at least one of a fifth function or a sixth function, that is, the user plane path may at least have at least one of the fifth function or the sixth function. The fifth function is used to control and manage traffic in the first PLMN, and the sixth function is used to control and manage traffic in the second PLMN. By deploying at least one of the fifth function or the sixth function, it is easy for the operators to perform management, control, encryption, user privacy protection, security protection, and monitoring of the network traffic.

The control plane path refers to an implementation by invoking service interfaces between control plane functions, which may be invoked directly or invoked by forwarding through SEPP or other functions.

The solution provided by the embodiments of the disclosure involves small changes to the current network, and extensively reuses existing devices, networks and routing, which is easy to deploy and may be quickly put into use.

Correspondingly, an embodiment of the disclosure further provides an EAS search method applied to a third function. The method includes the following operation.

First information is provided to a first function to perform an EAS search.

Here, in an embodiment, the method may further include at least one of the following operations.

DNS message handling rules are configured for the first function based on terminal subscription data.

The DNS message handling rules are configured for the first function based on an indication that a terminal supports the EAS services.

A UPF is reselected based on a terminal identifier.

A UPF supporting the EAS services is reselected.

An appropriate EASDF is selected based on location information.

EDI of the EAS services is configured for the EASDF.

EDI is configured for the first function based on the location information.

In a practical application, the UPF in the network supports different functions. According to the network deployment situation, it is possible that only some UPFs support the cross-operator EAS access services. Therefore, the SMF determines whether to select a UPF that supports the cross-operator EAS access for the terminal according to a UE capability identifier.

Here, the UE capability identifier is an identifier used to represent whether the terminal supports cross-operator EAS services and may be stored in Subscription data (SM). The subscription data may be stored in the UDM.

In an embodiment, the method may further include the following operation.

Fifth information is sent to a seventh function. The fifth information includes at least one of:
PDR;
FAR;
QER;
N6 transmission requirements;
a DSCP;
a VXLAN; or
a VLAN.
Here, the seventh function may include at least one of:
a UPF;
PSA UPF;
a ULCL; or
a BP.

In an embodiment, the method may further include at least one of the following operations.

A first indication is acquired from UDM in a session creation process.

The first indication is sent to an eleventh function in the session creation process.

Here, the first indication may indicate that at least one of a terminal or a session supports cross-PLMN EHE access/sharing EHE access/sharing node access/cross-operator edge service access/EAS access across operator networks.

Correspondingly, an embodiment of the disclosure further provides an EAS search method applied to a seventh function. The method includes the following operation.

Fifth information is received from a third function. The fifth information includes at least one of:
PDR;
FAR;
QER;
N6 transmission requirements;
a DSCP;
a VXLAN; or
a VLAN.

Here, in an embodiment, the method may further include the following operation.

At least one of a first identifier or a second identifier is marked in a data packet based on the fifth information.

In an embodiment, the first identifier may represent a QoS guarantee priority of the data packet, and the second identifier may represent that the data packet needs cross-operator QoS guarantee.

In an embodiment, the method may further include at least one of the following operations.

A third identifier is marked in a Layer 3 header of a data packet based on the fifth information.

A fourth identifier is marked in a Layer 2 header of the data packet based on the fifth information.

Here, the third identifier may include at least one of:
the N6 transmission requirements;
the DSCP;
the VXLAN; or
the VLAN.

The fourth identifier may include at least one of:
the N6 transmission requirements;
the DSCP;
the VXLAN; or
the VLAN.

Here, at least one of the third identifier or the fourth identifier is used to identify transmission requirements (i.e., the above N6 transmission requirements) for data transmission between two PLMNs (i.e., the first PLMN and the second PLMN).

Correspondingly, an embodiment of the disclosure further provides an EAS search method applied to a second function. The method includes the following operation.

At least one of first information or second information is received from a first function to perform an EAS search.

Here, in an embodiment, the operation that at least one of the first information or the second information is received from the first function may include the following operation.

At least one of the first information or the second information is received from the first function by at least one of:
a user plane path;
a control plane path; or
invoking a service interface.

Correspondingly, an embodiment of the disclosure further provides an EAS search method applied to an eleventh function (such as an AMF). The method includes the following operation.

A first indication is acquired. The first indication is used to select a third function, and the third function is used to provide first information to a first function to perform an EAS search.

Here, the first indication may indicate that at least one of a terminal or a session supports cross-PLMN EHE access/sharing EHE access/sharing node access/cross-operator edge service access/EAS access across operator networks.

In an embodiment, the operation that the first indication is acquired may include at least one of the following operations.

The first indication is acquired in a terminal registration process.

The first indication is acquired from the UDM.

In an embodiment, the method may further include at least one of the following operations.

The first indication is acquired from the third function in a session creation process.

The third function is selected according to the first indication.

The third function is reselected according to the first indication.

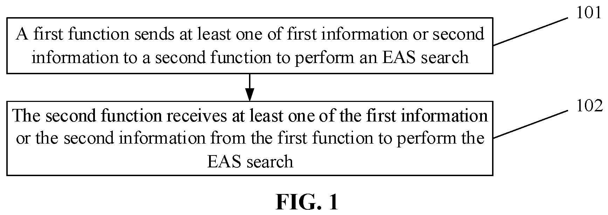

An embodiment of the disclosure further provides an EAS search method. As shown in FIG. 1, the method includes the following operations.

In operation 101, a first function sends at least one of first information or second information to a second function to perform an EAS search.

In operation 102, the second function receives at least one of the first information or the second information from the first function to perform the EAS search.

According to the EAS search method provided by the embodiments of the disclosure, the first function sends at least one of the first information or the second information to the second function to perform the EAS search. The second function receives at least one of the first information or the second information from the first function to perform the EAS search. With the solution provided by the embodiments of the disclosure, based on the information transmission mechanism between the first function and the second function, by deploying the first function on the first PLMN and deploying the second function on the second PLMN, the EAS may be discovered across operators (i.e., the EAS may be discovered across networks), thus enabling the cross-operator global QoS guarantee.

It is to be noted that in the various embodiments of the disclosure, multiple functions used to implement the EAS search method may be the same function or different functions. In other words, one or more operations (i.e., steps) of the EAS search method may be performed by the same function, or one or more operations of the EAS search method may be performed by different functions.

The disclosure is described in further detail below in combination with an application example.

In the application example, the first function includes EASDF 1 and belongs to the operator 1 (PLMN 1). The second function includes EASDF 2 and belongs to the operator 2 (PLMN 2). The third function includes an SMF. The fourth function including the UE. The fifth function includes the UPF 1. The sixth function includes the UPF 2. The seventh function includes at least one of a UPF PSA, a UPF ULCL/BP, or a UPF L-PSA/tPSA.

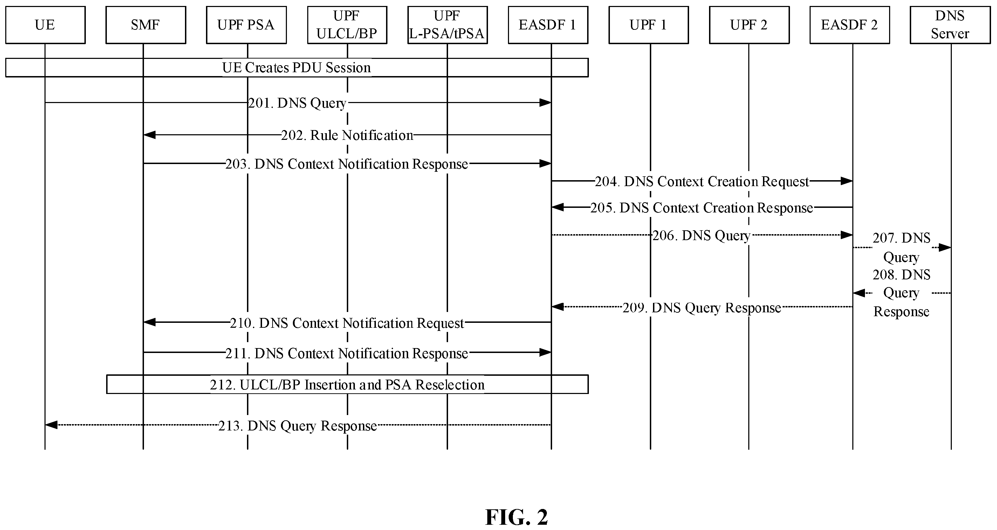

In the application example, as shown in FIG. 2, a cross-operator EAS search process may specifically include the following operations.

In operation 201, the UE sends a DNS query request, and then operation 202 is performed.

In operation 202, EASDF 1 sends a rule notification (which may also be referred to as a DNS context notification request, expressed as Neasdf_DNSContext_Notify request) to the SMF, and then operation 203 is performed.

In operation 203, the SMF sends a DNS context notification response (which may be expressed as Neasdf_DNSContext_Notify response) to EASDF 1, and then operation 204 is performed.

In operation 204, EASDF 1 sends a DNS context creation request (which may be expressed as Neasdf_NSContext_Create request) to EASDF 2, and then operation 205 is performed.

In operation 205, EASDF 2 sends a DNS context creation response to EASDF 1, and then operation 206 is performed.

In operation 206, EASDF 1 sends the DNS query request to EASDF 2, and then operation 207 is performed.

In operation 207, EASDF 2 sends the DNS query request to a DNS server, and then operation 208 is performed.

In operation 208, the DNS server sends a DNS query response to EASDF 2, and then operation 209 is performed.

In operation 209, EASDF 2 sends the DNS query response to EASDF 1, and then operation 210 is performed.

In operation 210, EASDF 1 sends the DNS context notification request (which may be expressed as Neasdf_DNSContext_Notify request) to the SMF, and then operation 211 is performed.

In operation 211, the SMF sends the DNS context notification response (which may be expressed as Neasdf_DNSContext_Notify response) to EASDF 1, and then operation 212 is performed.

In operation 212, the SMF performs ULCL/BP insertion and PSA reselection, and then operation 213 is performed.

In operation 213, EASDF 1 sends the DNS query response to the UE.

Here, pre-configuration is needed before the operation 201. That is, the application (such as an AF) may configure the EASDF address, PLMN ID, DSCP value and corresponding QoS value, application (App) information, and the location information that may provide EAS/sharing EAS/cross-operator EAS services etc., (i.e., the above third information) to the 5GC (such as to the EASDF and SMF, i.e., EASDF 1 is configured with the third information).

In a practical application, before the operation 201, the UE may complete the PDU session creation in the network of operator 1. In the PDU session creation process, the SMF may read UE subscription data from the UDM, which includes a federation capability identifier (i.e., the above UE capability identifier) of the UE. The identifier represents that the UE supports cross-operator EAS access services (i.e., the UE supports the EAS services).

In the operation 202, the EASDF 1 may match local rules to determine that the network of 5GC 1 (i.e. the above first PLMN) has no appropriate EAS to provide the edge services. In addition, EASDF 1 may determine that operator 2 may provide the EAS of the application according to pre-configuration information, App information, UE location information, and QoS levels that may be provided by operator 2.

In the operation 204, EASDF 1 may invoke the DNS context creation request (which may carry one or more of the UE IP address, SUPI, Data Network Name (DNN), notification endpoint, DNS message handling rules, UE location, or the like, i.e., carry the above first information) to transfer UE-related control plane information to EASDF 2.

In the operation 205, EASDF 2 may create a DNS session for the UE and return a response to EASDF 1.

In the operation 206, EASDF 1 may send the DNS query request (i.e., the above second information) to EASDF 2 through the user plane path. According to operator deployment situation, there may be at least one of UPF 1 (a unified outlet (inlet) of operator 1) or UPF 2 (a unified traffic outlet (inlet) of operator 2) on the user plane path.

In the operation 207, EASDF 2 sends the DNS query request to the DNS server for resolution.

In the operation 208, the DNS server may return a resolution result (which may include related information of the target EAS, such as the IP, the FQDN, or the like) to EASDF 2.

In the operation 210, EASDF 1 may invoke the DNS context notification request to send the DNS resolution result to the SMF (which may be expressed as reporting).

In the operation 212, the SMF may determine whether to reselect the UPF PSA or to perform the UL CL/BP according to the EAS location, UE location, and other rules of the operator 2. Since the operators have different deployment policies, not every UPF supports the cross-operator service access. Therefore, since the UE needs to perform the cross-operator EAS access, a UPF reselection (relocation) process is triggered, that is, the SMF reselects a UPF that supports cross-operator service access for the UE. Then, the SMF triggers an N4 session update process and issues rules such as updated PDR, QER and FAR (i.e., the above fifth information) to the reselected UPF or newly added UPF. That is, the SMF may write the QoS of the application and the corresponding DSCP value into at least one of the PDR, QER or FAR according to pre-configuration information (i.e., the third information).

In the operation 213, EASDF 1 sends the DNS response to the UE, and the UE may access the EAS of the operator 2.

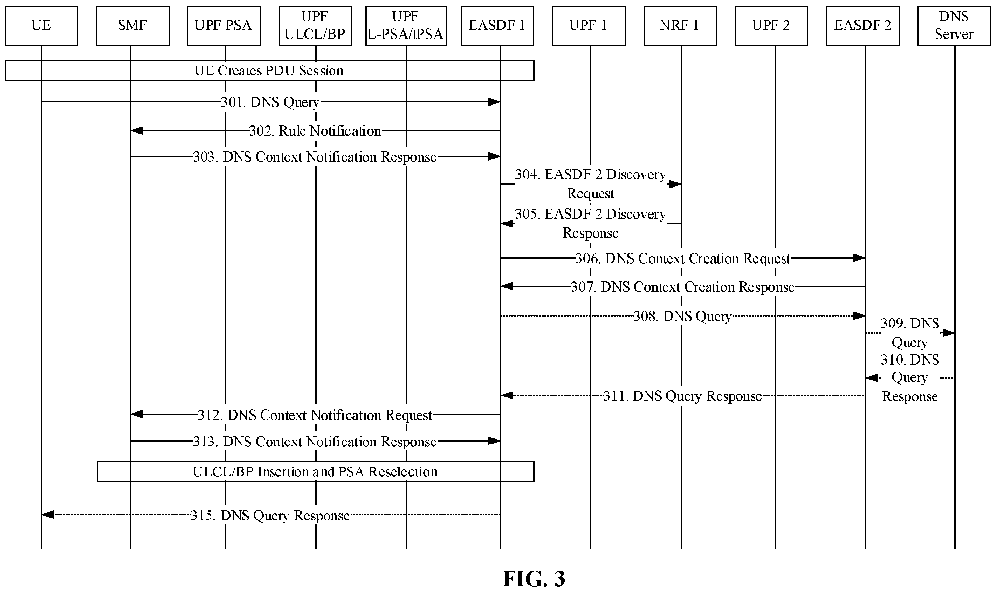

In the application example, as shown in FIG. 3, another cross-operator EAS search process may specifically include the following operations.

In operation 301, the UE sends a DNS query request, and then operation 302 is performed.

In operation 302, EASDF 1 sends a rule notification to the SMF, and then operation 303 is performed.

In operation 303, the SMF sends a DNS context notification response to EASDF 1, and then operation 304 is performed.

In operation 304, EASDF 1 sends an EASDF 2 discovery request to NRF 1 (i.e., the above eighth function), and then operation 305 is performed.

In operation 305, NRF 1 sends an EASDF 2 discovery response to EASDF 1, and then operation 306 is performed.

In operation 306, EASDF 1 sends a DNS context creation request to EASDF 2, and then operation 307 is performed.

In operation 307, EASDF 2 sends a DNS context creation response to EASDF 1, and then operation 308 is performed.

In operation 308, EASDF 1 sends the DNS query request to EASDF 2, and then operation 309 is performed.

In operation 309, EASDF 2 sends the DNS query request to a DNS server, and then operation 310 is performed.

In operation 310, the DNS server sends a DNS query response to EASDF 2, and then operation 311 is performed.

In operation 311, EASDF 2 sends the DNS query response to EASDF 1, and then operation 312 is performed.

In operation 312, EASDF 1 sends the DNS context notification request to the SMF, and then operation 313 is performed.

In operation 313, the SMF sends the DNS context notification response to EASDF 1, and then operation 314 is performed.

In operation 314, the SMF performs ULCL/BP insertion and PSA reselection, and then operation 315 is performed.

In operation 315, EASDF 1 sends the DNS query response to the UE.

Here, pre-configuration is needed before the operation 301. That is, the application (such as an AF) may configure the EASDF address, PLMN ID, DSCP value and corresponding QoS value, application (App) information, and the location information that may provide EAS/sharing EAS/cross-operator EAS services (i.e., the above third information) to the 5GC (such as to the EASDF and SMF, i.e., EASDF 1 is configured with the third information).

In a practical application, before the operation 301, the UE may complete PDU session creation in the network of operator 1. In the PDU session creation process, the SMF may read the UE subscription data from the UDM, which includes a federation capability identifier (i.e., the above UE capability identifier) of the UE. The identifier represents that the UE supports the cross-operator EAS access services (i.e., the UE supports the EAS services).

In the operation 302, EASDF 1 may match local rules to determine that the network of 5GC 1 (i.e. the above first PLMN) has no appropriate EAS to provide the edge services. In addition, the EASDF 1 may determine that another PLMN may provide appropriate EAS services for the UE according to DNS handling rules.

In the operation 304, EASDF 1 may request NRF 1 to search an appropriate EASDF 2 by sending the EASDF 2 discovery request to the NRF 1. The request may carry the UE location information, Application ID, or other information.

In the operation 305, the NRF 1 may determine the operator 2 (i.e. PLMN 2) and determine the appropriate EASDF 2 based on one or more of the application information pre-configured or dynamically configured by the 5GC, EDI, edge environment deployment information of another PLMN, third-party edge environment deployment information, PLMN ID, deployment location of the EAS, and QoS levels that may be provided by the operator 2 (i.e., the above fourth information).

In the operation 306, EASDF 1 may invoke the DNS context creation request (which may carry one or more of the UE IP address, SUPI, DNN, notification endpoint, DNS message handling rules, UE location, or the like, i.e., carry the above first information) to transfer the UE-related control plane information to EASDF 2.

In the operation 307, EASDF 2 may create a DNS session for the UE and return a response to EASDF 1.

In the operation 308, EASDF 1 may send the DNS query request (i.e., the above second information) to EASDF 2 through the user plane path. According to the operator deployment situation, there may be at least one of UPF 1 (a unified outlet (inlet) of the operator 1) or UPF 2 (a unified traffic outlet (inlet) of the operator 2) on the user plane path.

In the operation 309, EASDF 2 sends the DNS query request to the DNS server for resolution.

In the operation 310, the DNS server may return a resolution result (which may include related information of the target EAS, such as the IP, the FQDN, or the like) to EASDF 2.

In the operation 312, EASDF 1 may invoke the DNS context notification request to send the DNS resolution result to the SMF (which may be expressed as reporting).

In the operation 314, the SMF may determine whether to reselect the UPF PSA or to perform the UL CL/BP according to the EAS location, UE location, and other rules of the operator 2. Since the operators have different deployment policies, not every UPF supports the cross-operator service access. Therefore, since the UE needs to perform the cross-operator EAS access, a UPF reselection (relocation) process is triggered, that is, the SMF reselects a UPF that supports cross-operator service access for the UE. Then, the SMF triggers an N4 session update process and issues rules such as updated PDR, QER and FAR (i.e., the above fifth information) to the reselected UPF or newly added UPF. That is, the SMF may write the QoS of the application and the corresponding DSCP value into at least one of the PDR, QER or FAR according to the pre-configuration information (i.e., the third information).

In the operation 315, EASDF 1 sends the DNS response to the UE, and the UE may access the EAS of operator 2.

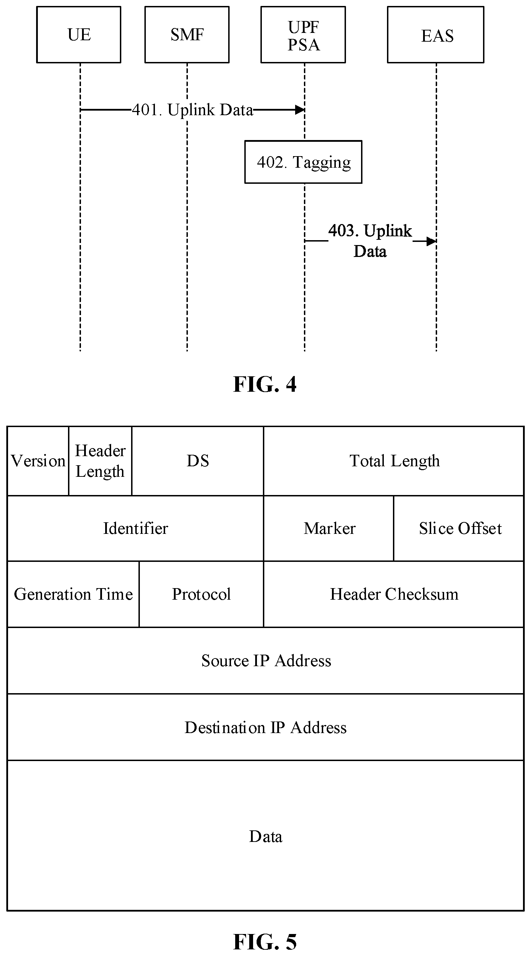

In the application example, as shown in FIG. 4, the user plane data processing process may include the following operations.

In operation 401, the UE sends uplink data, and then operation 402 is performed.

Here, the UE may send an uplink data packet to the EAS of the operator 2 according to the DNS query result obtained in the operation 213 or the operation 315.

In operation 402, the UPF tags the data packet, and then operation 403 is performed.

Here, the UPF may identify that the uplink data packet is the data packet sent to the cross-operator EAS based on at least one of the PDR, FAR or QER updated by the SMF (i.e., the above fifth information), and tag the data packet with a DSCP tag (i.e., at least one of the above first identifier, the second identifier, the third identifier, or the fourth identifier) according to at least one of the PDR, FAR or QER.

In operation 403, the UPF forwards uplink data to the EAS.

Here, after the UPF tags the uplink data packet with the DSCP tag, the data packet enters the data network (DN). Operator 1 may perform QoS guarantee for data stream of the service based on the DSCP tag of the UPF. When the data packet enters the Internet from DN 1 of the operator and then enters operator 2 from the Internet, the DSCP tag may be replaced based on a tripartite protocol. The Internet maintenance provider and operator 2 respectively complete QoS guarantee within their respective areas, which implements end-to-end global QoS guarantee.

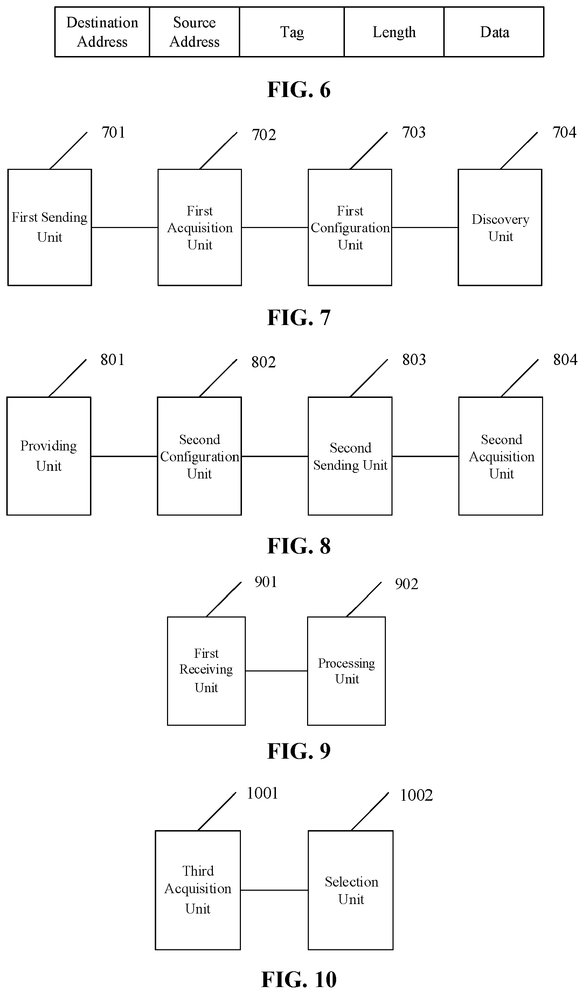

In the application example, when the UPF tags the uplink data packet with the DSCP tag, tags of Layer 2 and Layer 3 headers of the data packet may be used and mapped on demand according to a cooperation guarantee protocol of the operator 1, the Internet maintenance provider and the operator 2. Here, as shown in FIG. 5, after receiving the uplink data packet, the UPF may write the QoS guarantee level of the data stream into the DS field of the Layer 3 header of the data packet based on at least one of the PDR, FAR or QER. As shown in FIG. 6, the UPF may also tag the Layer 2 header of the data packet with a VLAN tag based on at least one of the PDR, FAR or QER.

In the application example, at least one of the PDR, FAR or QER updated by the SMF for the UPF may include at least one of the following Information Elements (IE).

IP presence, used to indicate that the data packet is a data packet that accesses the EAS across operators. The priority needs to be entered to the IP header to guarantee the cross-domain cooperation QoS guarantee.

A VLAN tag, used to indicate that the data packet is a data packet that accesses the EAS across operators. The Layer 2 header is needed to be tagged with a specific tag to identify the data, which guarantees that the identity of the data packet may be identified in the subsequent network, thereby completing the cross-domain cooperation QoS guarantee.

In the application example, the pre-configured EDI (i.e., the above third information) may include one or more of the following IEs.

An Application ID, used to identify the application program corresponding to the EDI.

One or more FQDNs, used to indicate the FQDN of the EASDF in another PLMN.

One or more PLMNs, used to identify the PLMN on which the EAS is located.

One or more Geographic locations, used to indicate a service area in which the application program may provide the EAS access.

An External Group Identifier/an Internal Group identifier, which may be understood as the Group ID corresponding to the EDI. Here, the AF may provide the external group identifier, and the NEF may map the external group identifier to the internal group identifier according to information received from the UDM. If the PLMN 1 provides the external group identifier for the PLMN 2, the PLMN 2 may identify that the UE is accessing the EAS.

A QoS, used to indicate the QoS that may be provided by PLMN 2, which may be used for the DSCP tag in the PDR, FAR and QER to guarantee an end-to-end (E2E) SLA.

The solution provided by the application example implements the end-to-end QoS coordination guarantee (i.e., cross-operator global QoS guarantee) through the EAS discovery and access across operators.

In order to implement the method of the first function side of the embodiments of the disclosure, an embodiment of the disclosure further provides an EAS search apparatus set on a first function. As shown in FIG. 7, the apparatus includes a first sending unit 701.

The first sending unit 701 is configured to send at least one of first information or second information to a second function to perform an EAS search.

Here, in an embodiment, as shown in FIG. 7, the apparatus may further include a first acquisition unit 702.

The first acquisition unit 702 is configured to perform at least one of :
acquiring the first information from a third function; or
acquiring the second information from a fourth function.

In an embodiment, as shown in FIG. 7, the apparatus may further include a first configuration unit 703.

The first configuration unit 703 is configured with third information, i.e., to receive the third information.

In an embodiment, the first sending unit 701 is further configured to send at least one of the first information or the second information to the second function by at least one of:
a user plane path;
a control plane path; or
invoking a service interface.

In an embodiment, as shown in FIG. 7, the apparatus may further include a discovery unit 704. The discovery unit 704 is configured to discover the second function through at least one of an eighth function or a ninth function.

In an embodiment, the discovery unit 704 is further configured to perform at least one of:
discovering address information of the second function;
discovering an IP address of the second function; or
discovering an FQDN of the second function.

In an embodiment, the discovery unit 704 may specifically discover (i.e., determine) the second function through fourth information of the eighth function.

In a practical application, the first sending unit 701 may be implemented by a communication interface in the first function. The first acquisition unit 702, the first configuration unit 703 and the discovery unit 704 may be implemented by a processor in the first function in combination with the communication interface.

In order to implement the method of the third function side of the embodiments of the disclosure, an embodiment of the disclosure further provides an EAS search apparatus set on a third function. As shown in FIG. 8, the apparatus includes a providing unit 801.

The providing unit 801 is configured to provide first information to a first function to perform an EAS search.

Here, in an embodiment, as shown in FIG. 8, the apparatus may further include a second configuration unit 802.

The second configuration unit 802 is configured to perform at least one of :
configuring DNS message handling rules for the first function based on terminal subscription data;
configuring the DNS message handling rules for the first function based on an indication that a terminal supports EAS services;
relocating a UPF based on a terminal identifier;
relocating a UPF supporting the EAS services;
locating an appropriate EASDF based on location information;
configuring EDI of the EAS services for the EASDF; or
configuring EDI for the first function based on the location information.

In an embodiment, as shown in FIG. 8, the apparatus may further include a second sending unit 803.

The second sending unit 803 is configured to send fifth information to a seventh function. The fifth information includes at least one of:
PDR;
FAR;
QER;
N6 transmission requirements;
a DSCP;
a VXLAN; or
a VLAN.

In an embodiment, as shown in FIG. 8, the apparatus may further include a second acquisition unit 804. The second acquisition unit 804 is configured to acquire a first indication from UDM in a session creation process.

In an embodiment, the second sending unit 803 is further configured to send the first indication to an eleventh function in the session creation process.

In a practical application, the providing unit 801 and the second sending unit 803 may be implemented by a communication interface in the third function. The second configuration unit 802 and the second acquisition unit 804 may be implemented by a processor in the EAS search apparatus in combination with the communication interface.

In order to implement the method of the seventh function side of the embodiments of the disclosure, an embodiment of the disclosure further provides an EAS search apparatus set on a seventh function. As shown in FIG. 9, the apparatus includes a first receiving unit 901.

The first receiving unit 901 is configured to receive fifth information from a third function. The fifth information includes at least one of:
PDR;
FAR;
QER;
N6 transmission requirements;
a DSCP;
a VXLAN; or
a VLAN.

Here, in an embodiment, as shown in FIG. 9, the apparatus may further include a processing unit 902.

The processing unit 902 is configured to mark at least one of a first identifier or a second identifier in a data packet based on the fifth information.

In an embodiment, the processing unit 902 is further configured to performing at least one of:
marking a third identifier in a Layer 3 header of a data packet based on the fifth information; or
marking a fourth identifier in a Layer 2 header of the data packet based on the fifth information.

In a practical application, the first receiving unit 901 may be implemented by a communication interface in the seventh function. The processing unit 902 may be implemented by a processor in the seventh function.

In order to implement the method of the second function side of the embodiments of the disclosure, an embodiment of the disclosure further provides an EAS search apparatus set on a second function. The apparatus includes a second receiving unit.

The second receiving unit is configured to receive at least one of first information or second information from a first function to perform an EAS search.

Here, in an embodiment, the second receiving unit is further configured to receive at least one of the first information or the second information from the first function by at least one of:
a user plane path;
a control plane path; or
invoking a service interface.

In a practical application, the second receiving unit may be implemented by a communication interface in the second function.

In order to implement the method of the eleventh function side of the embodiments of the disclosure, an embodiment of the disclosure further provides an EAS search apparatus set on an eleventh function. As shown in FIG. 10, the apparatus includes a third acquisition unit 1001.

The third acquisition unit 1001 is configured to acquire a first indication. The first indication is used to locate a third function, and the third function is used to provide first information to a first function to perform an EAS search.

Here, in an embodiment, the third acquisition unit 1001 is further configured to perform one of :
acquiring the first indication in a terminal registration process; or
acquiring the first indication from UDM.

In an embodiment, the third acquisition unit 1001 is further configured to acquire the first indication from the third function in a session creation process.

In an embodiment, as shown in FIG. 10, the apparatus may further include a selection unit 1002. The selection unit 1002 is configured to perform at least one of: locating the third function according to the first indication; or relocating the third function according to the first indication.

In a practical application, the third acquisition unit 1001 may be implemented by a processor in the eleventh function in combination with a communication interface. The selection unit 1002 may be implemented by the processor in the eleventh function.

It is to be noted that the EAS search apparatus provided by the above embodiments is only exemplarily illustrated by the division of the above program modules when searching the EAS. In a practical application, the above processing may be allocated to be completed by different program modules according to the requirements, that is, the internal structure of the apparatus is divided into different program modules to complete all or part of the processing described above. In addition, the EAS search apparatus provided by the above embodiments and the embodiments of the EAS searching method belong to the same idea, and the specific implementation process may be referred to the method embodiments, which will not be repeated here.

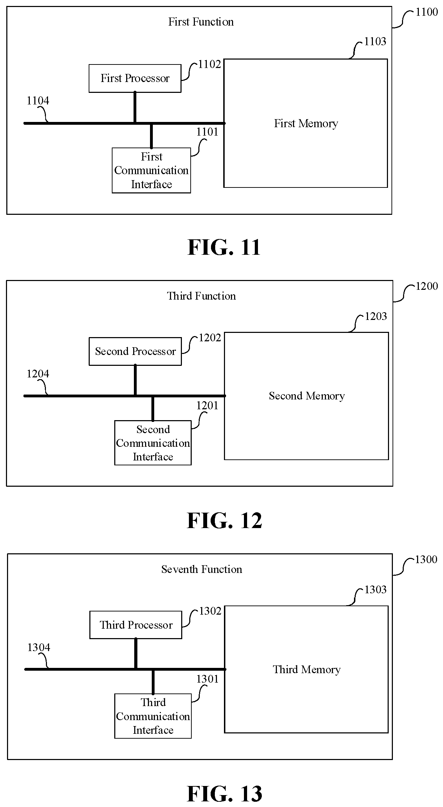

Based on the hardware implementation of the above program modules, and in order to implement the method of the first function side of the embodiments of the disclosure, an embodiment of the disclosure further provides a first function. As shown in FIG. 11, the first function 1100 includes a first communication interface 1101, a first processor 1102 and a first memory 1103.

The first communication interface 1101 may perform information interaction with another function (such as a second function, a third function, an eighth function, and a ninth function).

The first processor 1102 is connected to the first communication interface 1101 to implement the information interaction with another function, and is configured to, when running a computer program, perform the method provided by one or more technical solutions of the above first function side.

The computer program is stored on the first memory 1103.

Specifically, the first communication interface 1101 is configured to send at least one of first information or second information to a second function to perform an EAS search.

Here, in an embodiment, the first processor 1102 is configured to perform at least one of:
acquiring the first information from a third function through the first communication interface 1101; or
acquiring the second information from a fourth function through the first communication interface 1101.

In an embodiment, the first processor 1102 is further configured to be configured with third information, i.e., to receive the third information through the first communication interface 1101.

In an embodiment, the first communication interface 1101 is further configured to send at least one of the first information or the second information to the second function by at least one of:
a user plane path;
a control plane path; or
invoking a service interface.

In an embodiment, the first processor 1102 is further configured to discover the second function through at least one of an eighth function or a ninth function.

In an embodiment, the first processor 1102 is further configured to perform one of :
discovering address information of the second function;
discovering an IP address of the second function; or
discovering an FQDN of the second function.

In an embodiment, the first processor 1102 is further configured to discover (i.e., determine) the second function through fourth information of the eighth function.

It is to be noted that the specific processing processes of the first communication interface 1101 and the first processor 1102 may be understood with reference to the above method, which will not be repeated here.

Of course, in a practical application, various components in the first function 1100 are coupled together by a bus system 1104. It is to be understood that the bus system 1104 is used to implement the connection communication between these components. In addition to a data bus, the bus system 1104 further includes a power bus, a control bus and a status signal bus. However, for a clear illustration, each of the buses is marked as the bus system 1104 in FIG. 11.

The first memory 1103 in the embodiments of the disclosure is used to store various types of data to support the operations of the first function 1100. Examples of such data include any computer program configured to be operated on the first function 1100.

The method disclosed above in the embodiments of the disclosure may be applied in or implemented by the first processor 1102. The first processor 1102 may be an integrated circuit chip with a signal processing capability. In an implementation process, various operations in the above method may be completed by a hardware integrated logic circuit or instructions in the form of software in the first processor 1102. The above first processor 1102 may be a general purpose processor, a Digital Signal Processor (DSP), or other programmable logic devices, discrete gates or transistor logic devices, or discrete hardware components. The first processor 1102 may implement or execute various methods, operations and logic block diagrams disclosed in the embodiments of the disclosure. The general purpose processor may be a microprocessor or any conventional processor, or the like. Operations in combination with methods disclosed in the embodiments of the disclosure may be directly embodied to be executed and completed by a hardware decoding processor, or by a combination of hardware and software modules in the decoding processor. The software module may be located in a storage medium. The storage medium is located in the first memory 1103, and the first processor 1102 reads the information in the first memory 1103 to complete the operations of the preceding method in combination with its hardware.

In an exemplary embodiment, the first function 1100 may be implemented by one or more Application Specific Integrated circuits (ASIC), DSPs, Programmable Logic Devices (PLD), Complex Programmable Logic Devices (CPLD), Field-Programmable Gate Arrays (FPGA), general purpose processors, controllers, Micro Controller Units (MCU), Microprocessors, or other electronic components, to execute the preceding method.

Based on the hardware implementation of the above program modules, and in order to implement the method of the third function side of the embodiments of the disclosure, an embodiment of the disclosure further provides a third function. As shown in FIG. 12, the third function 1200 includes a second communication interface 1201, a second processor 1202 and a second memory 1203.

The second communication interface 1201 is configured to perform information interaction with another function (such as a first function and a seventh function).

The second processor 1202 is configured to be connected to the second communication interface 1201 to implement information interaction with another function, and is configured to, when running a computer program, perform the method provided by one or more technical solutions of the above third function side.

The computer program is stored on the second memory 1203.

Specifically, the second communication interface 1201 is configured to provide first information to a first function to perform an EAS search.

Here, in an embodiment, the second processor 1202 is configured to perform at least one of:
configuring DNS message handling rules for the first function based on terminal subscription data;
configuring the DNS message handling rules for the first function based on an indication that a terminal supports EAS services;
relocating a UPF based on a terminal identifier;
relocating a UPF supporting the EAS services;
locating an appropriate EASDF based on location information;
configuring EDI of the EAS services for the EASDF; or
configuring EDI for the first function based on the location information.

In an embodiment, the second communication interface 1201 is further configured to send fifth information to a seventh function. The fifth information include at least one of:
PDR;
FAR;
QER;
N6 transmission requirements;
a DSCP;
a VXLAN; or
a VLAN.

In an embodiment, the second processor 1202 is further configured to acquire a first indication from UDM in a session creation process through the second communication interface 1201.

In an embodiment, the second communication interface 1201 is further configured to send the first indication to an eleventh function in the session creation process.

It is to be noted that the specific processing processes of the second communication interface 1201 and the second processor 1202 may be understood with reference to the above method, which will not be repeated here.

Of course, in a practical application, various components in the third function 1200 are coupled together by a bus system 1204. It is to be understood that the bus system 1204 is used to implement the connection communication between these components. In addition to a data bus, the bus system 1204 further includes a power bus, a control bus and a status signal bus. However, for a clear illustration, the buses are marked as the bus system 1204 in FIG. 12.

The second memory 1203 in the embodiments of the disclosure is used to store various types of data to support the operations of the third function 1200. Examples of such data include any computer program configured to be operated on the third function 1200.

The method disclosed above in the embodiments of the disclosure may be applied in or implemented by the second processor 1202. The second processor 1202 may be an integrated circuit chip with a signal processing capability. In an implementation process, various operations in the above method may be completed by a hardware integrated logic circuit or instructions in the form of software in the second processor 1202. The above second processor 1202 may be a general purpose processor, a DSP, or other programmable logic devices, discrete gates or transistor logic devices, or discrete hardware components. The second processor 1202 may implement or execute various methods, operations and logic block diagrams disclosed in the embodiments of the disclosure. The general purpose processor may be a microprocessor or any conventional processor, or the like. Operations in combination with methods disclosed in the embodiments of the disclosure may be directly embodied to be executed and completed by a hardware decoding processor, or by a combination of hardware and software modules in the decoding processor. The software module may be located in a storage medium. The storage medium is located in the second memory 1203, and the second processor 1202 is configured to read the information in the second memory 1203 to complete the operations of the preceding method in combination with its hardware.

In an exemplary embodiment, the third function 1200 may be implemented by one or more ASICs, DSPs, PLDs, CPLDs, FPGAs, general purpose processors, controllers, MCUs, Microprocessors, or other electronic components, to execute the preceding method.

Based on the hardware implementation of the above program modules, and in order to implement the method of the seventh function side of the embodiments of the disclosure, an embodiment of the disclosure further provides a seventh function. As shown in FIG. 13, the seventh function 1300 includes a third communication interface 1301, a third processor 1302 and a third memory 1303.

The third communication interface 1301 may perform information interaction with another function (such as a third function).

The third processor 1302 is connected to the third communication interface 1301 to implement information interaction with another function, and is configured to, when running a computer program, perform the method provided by one or more technical solutions of the above seventh function side.

The computer program is stored on the third memory 1303.

Specifically, the third communication interface 1301 is configured to receive fifth information from a third function. The fifth information comprises at least one of
PDR;
FAR;
QER;
N6 transmission requirements;
a DSCP;
a VXLAN; or
a VLAN.

Here, in an embodiment, the third processor 1302 is configured to mark at least one of a first identifier or a second identifier in a data packet based on the fifth information.

In an embodiment, the third processor 1302 is further configured to perform at least one of:
marking a third identifier in a Layer 3 header of a data packet based on the fifth information; or
marking a fourth identifier in a Layer 2 header of the data packet based on the fifth information.

It is to be noted that the specific processing processes of the third communication interface 1301 and the third processor 1302 may be understood with reference to the above method, which will not be repeated here.

Of course, in a practical application, various components in the seventh function 1300 are coupled together by a bus system 1304. It is to be understood that the bus system 1304 is used to implement the connection communication between these components. In addition to a data bus, the bus system 1304 further includes a power bus, a control bus and a status signal bus. However, for a clear illustration, the buses are marked as the bus system 1304 in FIG. 13.

The third memory 1303 in the embodiments of the disclosure is configured to store various types of data to support the operations of the seventh function 1300. Examples of such data include any computer program used to be operated on the seventh function 1300.

The method disclosed above in the embodiments of the disclosure may be applied in or implemented by the third processor 1302. The third processor 1302 may be an integrated circuit chip with a signal processing capability. In an implementation process, various operations in the above method may be completed by a hardware integrated logic circuit or instructions in the form of software in the third processor 1302. The above third processor 1302 may be a general purpose processor, a DSP, or other programmable logic devices, discrete gates or transistor logic devices, or discrete hardware components. The third processor 1302 may implement or execute various methods, operations and logic block diagrams disclosed in the embodiments of the disclosure. The general purpose processor may be a microprocessor or any conventional processor, or the like. Operations in combination with methods disclosed in the embodiments of the disclosure may be directly embodied to be executed and completed by a hardware decoding processor, or by a combination of hardware and software modules in the decoding processor. The software module may be located in a storage medium. The storage medium is located in the third memory 1303, and the third processor 1302 is configured to read the information in the third memory 1303 to complete the operations of the preceding method in combination with its hardware.

In an exemplary embodiment, the seventh function 1300 may be implemented by one or more ASICs, DSPs, PLDs, CPLDs, FPGAs, general purpose processors, controllers, MCUs, Microprocessors, or other electronic components, to execute the preceding method.

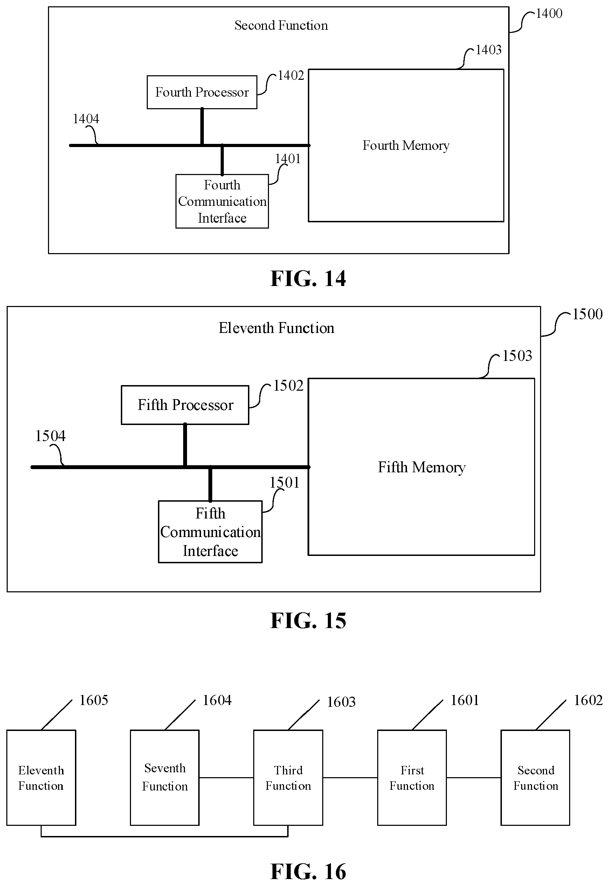

Based on the hardware implementation of the above program modules, and in order to implement the method of the second function side of the embodiments of the disclosure, an embodiment of the disclosure further provides a second function. As shown in FIG. 14, the second function 1400 includes a fourth communication interface 1401, a fourth processor 1402 and a fourth memory 1403.

The fourth communication interface 1401 may perform information interaction with another function (such as a first function).

The fourth processor 1402 is connected to the fourth communication interface 1401 to implement information interaction with another function, and is configured to, when running a computer program, perform the method provided by one or more technical solutions of the above second function side.

The computer program is stored on the fourth memory 1403.

Specifically, the fourth communication interface 1401 is configured to receive at least one of first information or second information from a first function to perform an EAS search.

Here, in an embodiment, the fourth communication interface 1401 is further configured to receive at least one of the first information or the second information from the first function by at least one of:
a user plane path;
a control plane path; or
invoking a service interface.

It is to be noted that the specific processing process of the fourth communication interface 1401 may be understood with reference to the above method, which will not be repeated here.

Of course, in a practical application, various components in the second function 1400 are coupled together by a bus system 1404. It is to be understood that the bus system 1404 is configured to implement the connection communication between these components. In addition to a data bus, the bus system 1404 further includes a power bus, a control bus and a status signal bus. However, for a clear illustration, the buses are marked as the bus system 1404 in FIG. 14.

The fourth memory 1403 in the embodiments of the disclosure is configured to store various types of data to support the operations of the second function 1400. Examples of such data include any computer program used to be operated on the second function 1400.

The method disclosed above in the embodiments of the disclosure may be applied in or implemented by the fourth processor 1402. The fourth processor 1402 may be an integrated circuit chip with a signal processing capability. In an implementation process, various operations in the above method may be completed by a hardware integrated logic circuit or instructions in the form of software in the fourth processor 1402. The above fourth processor 1402 may be a general purpose processor, a DSP, or other programmable logic devices, discrete gates or transistor logic devices, or discrete hardware components. The fourth processor 1402 may implement or execute various methods, operations and logic block diagrams disclosed in the embodiments of the disclosure. The general purpose processor may be a microprocessor or any conventional processor, or the like. Operations in combination with methods disclosed in the embodiments of the disclosure may be directly embodied to be executed and completed by a hardware decoding processor, or by a combination of hardware and software modules in the decoding processor. The software module may be located in a storage medium. The storage medium is located in the fourth memory 1403, and the fourth processor 1402 is configured to read the information in the fourth memory 1403 to complete the operations of the preceding method in combination with its hardware.

In an exemplary embodiment, the second function 1400 may be implemented by one or more ASICs, DSPs, PLDs, CPLDs, FPGAs, general purpose processors, controllers, MCUs, Microprocessors, or other electronic components, to execute the preceding method.

Based on the hardware implementation of the above program modules, and in order to implement the method of the eleventh function side of the embodiments of the disclosure, an embodiment of the disclosure further provides an eleventh function. As shown in FIG. 15, the eleventh function 1500 includes a fifth communication interface 1501, a fifth processor 1502 and a fifth memory 1503.

The fifth communication interface 1501 is configured to perform information interaction with another function (such as a third function and UDM).

The fifth processor 1502 is connected to the fifth communication interface 1501 to implement information interaction with another function, and is configured to, when running a computer program, perform the method provided by one or more technical solutions of the above eleventh function side.

The computer program is stored on the fifth memory 1503.

Specifically, the fifth processor 1502 is configured to acquire a first indication through the fifth communication interface 1501. The first indication is used to locate a third function, and the third function is used to provide first information to a first function to perform an EAS search.

Here, in an embodiment, the fifth processor 1502 is further configured to perform at least one of :
acquiring the first indication in a terminal registration process; or
acquiring the first indication from UDM through the fifth communication interface 1501.

In an embodiment, the fifth processor 1502 is further configured to acquire the first indication from the third function in a session creation process through the fifth communication interface 1501.

In an embodiment, the fifth processor 1502 is further configured to perform at least one of: locating the third function according to the first indication; or relocating the third function according to the first indication.

It is to be noted that the specific processing processes of the fifth communication interface 1501 and the fifth processor 1502 may be understood with reference to the above method, which will not be repeated here.

Of course, in a practical application, various components in the eleventh function 1500 are coupled together by a bus system 1504. It is to be understood that the bus system 1504 is configured to implement the connection communication between these components. In addition to a data bus, the bus system 1504 further includes a power bus, a control bus and a status signal bus. However, for a clear illustration, the buses are marked as the bus system 1504 in FIG. 15.

The fifth memory 1503 in the embodiments of the disclosure is used to store various types of data to support the operations of the eleventh function 1500. Examples of such data include any computer program configured to be operated on the eleventh function 1500.

The method disclosed above in the embodiments of the disclosure may be applied in or implemented by the fifth processor 1502. The fifth processor 1502 may be an integrated circuit chip with a signal processing capability. In an implementation process, various operations in the above method may be completed by a hardware integrated logic circuit or instructions in the form of software in the fifth processor 1502. The above fifth processor 1502 may be a general purpose processor, a DSP, or other programmable logic devices, discrete gates or transistor logic devices, or discrete hardware components. The fifth processor 1502 may implement or execute various methods, operations and logic block diagrams disclosed in the embodiments of the disclosure. The general purpose processor may be a microprocessor or any conventional processor, or the like. Operations in combination with methods disclosed in the embodiments of the disclosure may be directly embodied to be executed and completed by a hardware decoding processor, or by a combination of hardware and software modules in the decoding processor. The software module may be located in a storage medium. The storage medium is located in the fifth memory 1503, and the fifth processor 1502 is configured to read the information in the fifth memory 1503 to complete the operations of the preceding method in combination with its hardware.

In an exemplary embodiment, the eleventh function 1500 may be implemented by one or more ASICs, DSPs, PLDs, CPLDs, FPGAs, general purpose processors, controllers, MCUs, Microprocessors, or other electronic components, to execute the preceding method.

It is to be understood that the memory of the embodiments of the disclosure (the first memory 1103, the second memory 1203, the third memory 1303, the fourth memory 1403, and the fifth memory 1503) may be a volatile memory or a non-volatile memory, or may include a volatile memory and a non-volatile memory. Here, the non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a Flash Memory, a magnetic surface memory, an optical disc, or a Compact Disc Read-Only Memory (CD-ROM). The magnetic surface memory may be a magnetic disk memory or a magnetic tape memory. The volatile memory may be a Random Access Memory (RAM), and is used as an external high-speed cache. It is exemplarily but unlimitedly illustrated that RAMs in various forms may be used, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a Synclink Dynamic Random Access Memory (SLDRAM), or a Direct Rambus Random Access Memory (DRRAM). The memory described in the embodiments of the disclosure is intended to include memories of these and any other proper types, but is not limited thereto.

In order to implement the method provided by the embodiments of the disclosure, an embodiment of the disclosure further provides an EAS search system. As shown in FIG. 16, the system includes a first function 1601, a second function 1602, a third function 1603, a seventh function 1604 and an eleventh function 1605.

Here, it is to be noted that the specific processing processes of the first function 1601, the second function 1602, the third function 1603, the seventh function 1604 and the eleventh function 1605 have been described in detail above, and will not be repeated here.

In an exemplary embodiment, an embodiment of the disclosure further provides a storage medium, i.e., a computer storage medium, specifically, a computer readable storage medium. For example, the storage medium includes a first memory 1103 having stored thereon a computer program that may be executed by a first processor 1102 of a first function 1100 to complete the operations of the preceding method of the first function side. In another example, the storage medium includes a second memory 1203 having stored thereon a computer program that may be executed by a second processor 1202 of a third function 1200 to complete the operations of the preceding method of the third function side. In another example, the storage medium includes a third memory 1303 having stored thereon a computer program that may be executed by a third processor 1302 of a seventh function 1300 to complete the operations of the preceding method of the seventh function side. In another example, the storage medium includes a fourth memory 1403 having stored thereon a computer program that may be executed by a fourth processor 1402 of a second function 1400 to complete the operations of the preceding method of the second function side. In another example, the storage medium includes a fifth memory 1503 having stored thereon a computer program that may be executed by a fifth processor 1502 of an eleventh function 1500 to complete the operations of the preceding method of the eleventh function side. The computer readable storage medium may be an FRAM, a ROM, a PROM, an EPROM, an EEPROM, a Flash Memory, a magnetic surface memory, an optical disc, a CD-ROM, or the like.

It is to be noted that terms such as "first", "second", or the like are used to distinguish similar objects and are not necessarily used to describe a specific order or sequence.

In addition, the technical solutions described in the embodiments of the disclosure may be arbitrarily combined without conflict.

The above is only preferred embodiments of the disclosure and is not used to limit the scope of protection of the disclosure.

## Claims

1. An Edge Application Server, EAS, search method, applied to a first function, comprising:
sending (101) at least one of first information or second information to a second function, wherein the at least one of the first information or the second information is used for performing an EAS search, the first function belongs to a first Public Land Mobile Network, PLMN, belonging to a first operator, and the second function belongs to a second PLMN belonging to a second operator,
wherein the first information comprises at least one of:
a terminal Internet Protocol, IP, address;
a terminal identifier;
a Subscription Permanent Identifier, SUPI;
a Generic Public Subscription Identifier, GPSI;
a PLMN identifier;
a notification endpoint;
a terminal location;
Domain Name System, DNS, message handling rules;
an application identifier; or
N6 transmission requirements,
wherein the second information comprises at least one of:
a Domain Name System, DNS, query;
Extension mechanisms for DNS, EDNS;
a Fully Qualified Domain Name, FQDN, of an EAS;
a terminal Internet Protocol, IP, address;
a terminal identifier; or
a terminal location
**characterized in that** the method further comprises:
discovering the second function through an eighth function, wherein the eighth function comprises a Network Repository Function, NRF, of the first PLMN to which the first function belongs,
wherein discovering the second function through the eighth function comprises:
requesting the NRF to search the second function by sending a second function discovery request to the NRF, wherein the request carries terminal location information and an application identifier.

2. The method of claim 1, further comprising at least one of:
acquiring the first information from a third function; or
acquiring the second information from a fourth function,
wherein the third function comprises at least one of:
a Session Management Function, SMF;
an EAS Discovery Function, EASDF;
a Policy Control Function, PCF; or
a Radio Access Network, RAN,
and wherein the fourth function comprises at least one of:
a terminal;
a base station;
a Radio Access Network, RAN; or
a User Plane Function, UPF.

3. The method of claim 1, wherein the first function comprises at least one of:
an EAS Discovery Function, EASDF;
a Session Management Function, SMF;
Security Edge Protection Proxies, SEPP; or
a Network Exposure Function, NEF.

4. The method of any one of claims 1 to 3, further comprising:
being configured with third information,
wherein the third information comprises at least one of:
an application identifier;
a PLMN identifier;
an Internet Protocol, IP, address of the first function;
a Fully Qualified Domain Name, FQDN, of the first function;
an IP address of an EAS Discovery Function, EASDF;
an FQDN of the EASDF;
a geographic location;
an external group identifier;
an internal group identifier;
N6 transmission requirements;
a Differentiated Services Code Point, DSCP;
a Virtual Extensible Local Area Network, VXLAN;
a Virtual Local Area Network, VLAN; or
a service scope,
wherein at least one of the first information or the second information is sent to the second function by at least one of:
a user plane path;
a control plane path; or
invoking a service interface, wherein the user plane path at least comprises at least one of a fifth function or a sixth function, the fifth function is used to control and manage traffic in the first PLMN, and the sixth function is used to control and manage traffic in the second PLMN.

5. The method of claim 1, wherein the second function is discovered through fourth information of the eighth function.

6. The method of claim 5, wherein the fourth information comprises at least one of:
EAS Deployment Information, EDI;
edge environment deployment information of another PLMN;
application information;
EAS location information;
third-party edge environment deployment information;
a PLMN identifier;
a Data Network Access Identifier, DNAI;
N6 routing information;
a Differentiated Services Code Point, DSCP; or
a Service Level Agreement, SLA.

7. The method of claim 6, wherein the fourth information is configured by at least one of:
being pre-configured on the eighth function; or
being configured on the eighth function by a tenth function.

8. A first function, comprising a first processor and a first memory configured to store a computer program runnable on a processor,
wherein the first processor is configured to, when running the computer program, perform operations of the method of any one of claims 1 to 7.

9. A storage medium having stored thereon a computer program that, when executed by a processor, implements operations of the method of any one of claims 1 to 7.

## Patentansprüche

1. Edge-Anwendungsserver-Suchverfahren, EAS-Suchverfahren, das auf eine erste Funktion angewendet wird, umfassend:
Senden (101) mindestens eines von ersten Informationen oder zweiten Informationen an eine zweite Funktion, wobei die mindestens einen der ersten Informationen oder der zweiten Informationen zum Durchführen einer EAS-Suche verwendet werden, die erste Funktion zu einem ersten öffentlichen Mobilkommunikationsnetz, PLMN, gehört, das zu einem ersten Betreiber gehört, und die zweite Funktion zu einem zweiten PLMN gehört, das zu einem zweiten Betreiber gehört,
wobei die ersten Informationen mindestens eines umfassen von:
einer Endgeräte-Internetprotokoll-Adresse, Endgeräte-IP-Adresse;
einer Endgerätekennung;
einer permanenten Teilnehmerkennung, SUPI;
einer generischen öffentlichen Teilnehmerkennung, GPSI;
einer PLMN-Kennung;
einem Benachrichtigungsendpunkt;
einem Endgerätestandort;
Domänennamensystem-Nachrichtenbehandlungsregeln, DNS-Nachrichtenbehandlungsregeln;
einer Anwendungskennung; oder
N6-Übertragungsbedingungen,
wobei die zweiten Informationen mindestens eines umfassen von:
einer Domänennamensystem-Abfrage, DNS-Abfrage;
Erweiterungsmechanismen für DNS, EDNS;
einem vollständig qualifizierten Domänennamen, FQDN, eines EAS;
einer Endgeräte-Internetprotokoll-Adresse, Endgeräte-IP-Adresse;
einer Endgerätekennung; oder
einem Endgerätestandort
**dadurch gekennzeichnet, dass** das Verfahren ferner umfasst:
Erkennen der zweiten Funktion durch eine achte Funktion, wobei die achte Funktion eine Netzwerk-Repository-Funktion, NRF, des ersten PLMN umfasst, zu dem die erste Funktion gehört,
wobei das Erkennen der zweiten Funktion durch die achte Funktion umfasst:
Anfordern der NRF, die zweite Funktion durch Senden einer zweiten Funktionserkennungsanforderung an die NRF zu suchen, wobei die Anforderung Endgerätestandortinformationen und eine Anwendungskennung mitführt.

2. Verfahren nach Anspruch 1, ferner umfassend mindestens eines von:
Erfassen der ersten Informationen von einer dritten Funktion; oder
Erfassen der zweiten Informationen von einer vierten Funktion,
wobei die dritte Funktion mindestens eines umfasst von:
einer Sitzungsverwaltungsfunktion, SMF;
einer EAS-Erkennungsfunktion, EASDF;
einer Richtliniensteuerungsfunktion, PCF; oder
einem Funkzugangsnetzwerk, RAN,
und wobei die vierte Funktion mindestens eines umfasst von:
einem Endgerät;
einer Basisstation;
einem Funkzugangsnetzwerk, RAN; oder
einer Benutzerebenenfunktion, UPF.

3. Verfahren nach Anspruch 1, wobei die erste Funktion mindestens eines umfasst von:
einer EAS-Erkennungsfunktion, EASDF;
einer Sitzungsverwaltungsfunktion, SMF;
Sicherheits-Edge-Schutz-Proxys, SEPP; oder
einer Netzwerkexpositionsfunktion, NEF.

4. Verfahren nach einem der Ansprüche 1 bis 3, ferner umfassend:
Konfiguriertwerden mit dritten Informationen,
wobei die dritten Informationen mindestens eines umfassen von:
einer Anwendungskennung;
einer PLMN-Kennung;
einer Internetprotokoll-Adresse, IP-Adresse, der ersten Funktion;
einem vollständig qualifizierten Domänennamen, FQDN, der ersten Funktion;
einer IP-Adresse einer EAS-Erkennungsfunktion, EASDF;
einem FQDN der EASDF;
einem geografischen Standort;
einer externen Gruppenkennung;
einer internen Gruppenkennung;
N6-Übertragungsbedingungen;
einem Differentiated-Services-Code-Point, DSCP;
einem virtuellen erweiterbaren lokalen Netzwerk, VXLAN;
einem virtuellen lokalen Netzwerk, VLAN; oder
einem Dienstumfang,
wobei mindestens eines der ersten Informationen oder der zweiten Informationen an die zweite Funktion gesendet wird durch mindestens eines von:
einem Benutzerebenenpfad;
einem Steuerungsebenenpfad; oder
Aufrufen einer Dienstschnittstelle, wobei der Benutzerebenenpfad mindestens eine einer fünften Funktion oder einer sechsten Funktion mindestens umfasst, wobei die fünfte Funktion verwendet wird, um Verkehr in dem ersten PLMN zu steuern und zu verwalten, und die sechste Funktion verwendet wird, um Verkehr in dem zweiten PLMN zu steuern und zu verwalten.

5. Verfahren nach Anspruch 1, wobei die zweite Funktion durch vierte Informationen der achten Funktion erkannt wird.

6. Verfahren nach Anspruch 5, wobei die vierten Informationen mindestens eines umfassen von:
EAS-Bereitstellungsinformationen, EDI;
Bereitstellungsinformationen einer Edge-Umgebung eines anderen PLMN;
Anwendungsinformationen;
EAS-Standortinformationen;
Bereitstellungsinformationen einer Edge-Umgebung eines Dritten;
einer PLMN-Kennung;
einer Datennetzwerkzugangskennung, DNAI;
N6-Routing-Informationen;
einem Differentiated-Services-Code-Point, DSCP; oder
einer Dienstgütevereinbarung, SLA.

7. Verfahren nach Anspruch 6, wobei die vierten Informationen konfiguriert sind durch mindestens eines von:
Vorkonfiguriertwerden auf der achten Funktion; oder
Konfiguriertwerden auf der achten Funktion durch eine zehnte Funktion.

8. Erste Funktion, umfassend einen ersten Prozessor und einen ersten Speicher, der konfiguriert ist, um ein auf einem Prozessor ablaufbares Computerprogramm abzuspeichern,
wobei der erste Prozessor konfiguriert ist, um, wenn das Computerprogramm abläuft, Betriebsvorgänge des Verfahrens nach einem der Ansprüche 1 bis 7 durchzuführen.

9. Speicherungsmedium, das ein Computerprogramm darauf abgespeichert aufweist, das, wenn es durch einen Prozessor ausgeführt wird, Betriebsvorgänge des Verfahrens nach einem der Ansprüche 1 bis 7 implementiert.

## Revendications

1. Procédé de recherche de serveur d'applications en périphérie, EAS, appliqué à une première fonction, comprenant :
l'envoi (101) d'au moins l'une parmi des premières informations ou des deuxièmes informations à une deuxième fonction, dans lequel l'au moins une parmi les premières informations ou les deuxièmes informations est utilisée pour la mise en œuvre d'une recherche d'EAS, la première fonction appartient à un premier réseau mobile terrestre public, PLMN, appartenant à un premier opérateur, et la deuxième fonction appartient à un second PLMN appartenant à un second opérateur,
dans lequel les premières informations comprennent au moins l'un parmi :
une adresse de protocole Internet, IP, de terminal ;
un identificateur de terminal ;
un identificateur permanent d'abonnement, SUPI ;
un identificateur d'abonnement public générique, GPSI ;
un identificateur PLMN ;
un point de terminaison de notification ;
une localisation de terminal ;
des règles de traitement de message de système de nom de domaine, DNS ;
un identificateur d'application ; ou
des exigences de transmission N6,
dans lequel les deuxièmes informations comprennent au moins l'un parmi :
une requête de système de nom de domaine, DNS ;
des mécanismes d'extension pour DNS, EDNS ;
un nom de domaine complet, FQDN, d'un EAS ;
une adresse de protocole Internet, IP, de terminal ;
un identificateur de terminal ; ou
une localisation de terminal
**caractérisé en ce que** le procédé comprend en outre :
la découverte de la deuxième fonction par le biais d'une huitième fonction, dans lequel la huitième fonction comprend une fonction de référentiel réseau, NRF, du premier PLMN auquel la première fonction appartient,
dans lequel la découverte de la deuxième fonction par le biais de la huitième fonction comprend :
le fait de demander à la NRF de rechercher la deuxième fonction en envoyant une demande de découverte de deuxième fonction à la NRF, dans lequel la demande transporte des informations de localisation de terminal et un identificateur d'application.

2. Procédé selon la revendication 1, comprenant en outre au moins l'une parmi :
l'acquisition des premières informations auprès d'une troisième fonction ; ou
l'acquisition des deuxièmes informations auprès d'une quatrième fonction,
dans lequel la troisième fonction comprend au moins l'un parmi :
une fonction de gestion de session, SMF ;
une fonction de découverte d'EAS, EASDF ;
une fonction de commande de politique, PCF ; ou
un réseau d'accès radio, RAN,
et dans lequel la quatrième fonction comprend au moins l'un parmi :
un terminal ;
une station de base ;
un réseau d'accès radio, RAN ; ou
une fonction de plan utilisateur, UPF.

3. Procédé selon la revendication 1, dans lequel la première fonction comprend au moins l'un parmi :
une fonction de découverte d'EAS, EASDF ;
une fonction de gestion de session, SMF ;
des mandataires de protection de périphérie de sécurité, SEPP ; ou
une fonction d'exposition réseau, NEF.

4. Procédé selon l'une quelconque des revendications 1 à 3, comprenant en outre :
le fait d'être configuré avec des troisièmes informations,
dans lequel les troisièmes informations comprennent au moins l'un parmi :
un identificateur d'application ;
un identificateur PLMN ;
une adresse de protocole Internet, IP, de la première fonction ;
un nom de domaine complet, FQDN, de la première fonction ;
une adresse IP d'une fonction de découverte d'EAS, EASDF ;
un FQDN de l'EASDF ;
une localisation géographique ;
un identificateur de groupe externe ;
un identificateur de groupe interne ;
des exigences de transmission N6 ;
un point de code de services différenciés, DSCP ;
un réseau local extensible virtuel, VXLAN ;
un réseau local virtuel, VLAN ; ou
une portée de service,
dans lequel au moins l'une parmi les premières informations ou les deuxièmes informations est envoyée à la deuxième fonction par au moins l'un parmi :
un chemin de plan utilisateur ;
un chemin de plan de commande ; ou
le fait d'invoquer une interface de service, dans lequel le chemin de plan utilisateur comprend au moins au moins l'une parmi une cinquième fonction ou une sixième fonction, la cinquième fonction est utilisée pour commander et gérer le trafic dans le premier PLMN, et la sixième fonction est utilisée pour commander et gérer le trafic dans le second PLMN.

5. Procédé selon la revendication 1, dans lequel la deuxième fonction est découverte par le biais de quatrièmes informations de la huitième fonction.

6. Procédé selon la revendication 5, dans lequel les quatrièmes informations comprennent au moins l'un parmi :
des informations de déploiement d'EAS, EDI ;
des informations de déploiement d'environnement périphérique d'un autre PLMN ;
des informations d'application ;
des informations de localisation d'EAS ;
des informations de déploiement d'environnement périphérique tiers ;
un identificateur PLMN ;
un identificateur d'accès au réseau de données, DNAI ;
des informations de routage N6 ;
un point de code de services différenciés, DSCP ; ou
un accord de niveau de service, SLA.

7. Procédé selon la revendication 6, dans lequel les quatrièmes informations sont configurées par au moins l'un parmi :
le fait d'être préconfigurées sur la huitième fonction ; ou
le fait d'être préconfigurées sur la huitième fonction par une dixième fonction.

8. Première fonction, comprenant un premier processeur et une première mémoire configurée pour stocker un programme informatique exécutable sur un processeur,
dans lequel le premier processeur est configuré, lors d'une exécution du programme informatique, pour mettre en œuvre des opérations du procédé selon l'une quelconque des revendications 1 à 7.

9. Support de stockage sur lequel est stocké un programme informatique qui, lorsqu'il est exécuté par un processeur, implémente des opérations du procédé selon l'une quelconque des revendications 1 à 7.
